# FASCICULE DE BREVET EUROPEEN

(11) **EP 2 694 569 B1**
(45) Date de publication et mention de la délivrance du brevet: **04.11.2015**
(21) Numéro de dépôt: 12720254.7
(22) Date de dépôt: 05.04.2012
(51) Int. Cl.: C08G 64/02, C08G 64/30

(54) **PROCEDE DE FABRICATION DE POLYCARBONATE A PARTIR DE DIALKYLCARBONATE DE DIANHYDROHEXITOL**
VERFAHREN ZUR HERSTELLUNG VON POLYCARBONAT AUS DIANHYDROHEXITOLDIALKYLCARBONAT
PROCESS FOR MANUFACTURING POLYCARBONATE FROM DIANHYDROHEXITOL DIALKYLCARBONATE

(30) Priorité: 05.04.2011 FR 1152950
(43) Date de publication de la demande: 12.02.2014
(73) Titulaire: Roquette Frères, 62136 Lestrem (FR)
(72) Inventeur: IBERT, Mathias, F-59930 La Chapelle D'armentieres (FR); JOSIEN, Emilie, F-62350 St Venant (FR); WYART, Hervé, F-62149 Cuinchy (FR)
(74) Mandataire: Cabinet Plasseraud
(86) Numéro de dépôt international: PCT/FR2012/050748
(87) Numéro de publication internationale: WO 2012/136942

(56) Documents cités:
- WO-A1-2011/039483
- JP-A- 2003 292 603
- US-A1- 2010 196 720

## Description

L'invention a pour objet un nouveau procédé de fabrication de polycarbonate présentant les avantages qui vont être décrits ci-après et le polycarbonate pouvant être obtenu à partir de ce procédé.

Le développement de polymères issus de ressources biologiques renouvelables à court terme est devenu un impératif écologique et économique, face à l'épuisement et à la montée des prix des ressources fossiles telles que le pétrole.
Dans ce contexte, l'utilisation de dianhydrohexitols, issus de (poly)saccharides végétaux, en tant que monomères dihydroxylés pour la fabrication de polymères par polycondensation, semble être une approche prometteuse de remplacement de monomères d'origine pétrochimique.
Parmi ces polymères, les polycarbonates sont des matériaux thermoplastiques amorphes qui présentent des propriétés intéressantes, en particulier des propriétés mécaniques ou optiques. Classiquement, ils sont obtenus par polycondensation de diols et de carbonate de diphényle, de phosgène ou de diphosgène.

A titre d'exemple, la préparation de polycarbonates à base de dianhydrohexitols a été décrite dans la demande de brevet EP 2033981 A1. Ce document décrit la polycondensation d'un mélange d'isosorbide, d'au moins un deuxième diol alicyclique et de carbonate de diphényle.

Le procédé présente l'inconvénient de générer du phénol, composé toxique, en quantité importante en tant que sous-produit de la réaction de polymérisation.

Un autre exemple de procédé de fabrication de polycarbonate à base d'isosorbide est également décrit dans l'article de Saber CHATTI, intitulé « Cyclic and Noncyclic Polycarbonates of Isosorbide (1,4 :3,6-dianhydro-D-glucitol), dans Macromolecules, 2006, 9061-9070. Les seuls procédés permettant effectivement la fabrication de polycarbonate utilisent quant à eux des réactifs ou solvants toxiques, voire très toxiques, tels que le phosgène, le diphosgène, la pyridine ou le bis-chloroformiate.

On peut également citer la demande de brevet US 2004/0241553 A1 qui décrit un électrolyte conducteur d'ions, à base d'un composé comprenant des groupements carbonate de dianhydrohexitol et un sel électrolyte. Le composé pour électrolyte à base de carbonate de dianhydrohexitol peut être, ou non, un polymère.
Un intermédiaire pour la fabrication de ce composé pour électrolyte, décrit à la formule (6) de ce document, est choisi parmi certains dialkylcarbonates de dianhydrohexitol et le diphénylcarbonate de dianhydrohexitol. Toutefois, selon la variante où ce composé est un polymère, il est toujours fabriqué à partir de diphénylcarbonate de dianhydrohexitol.
Le procédé de fabrication de ce composé polymérique génère également du phénol.
Le polymère est obtenu par copolymérisation avec un monomère choisi parmi les diols aliphatiques et les éthers oligomères. Il en résulte ainsi un polymère flexible, cette flexibilité étant une condition nécessaire pour obtenir une bonne conductivité ionique de l'électrolyte.

Par ailleurs, s'il est connu par exemple du document US 2010196720 que l'on peut fabriquer des polycarbonates en faisant réagir des dialkylcarbonates avec de l'isosorbide et un diol cyclique, la Demanderesse a pu constater que les rendements obtenus avec ces procédés ne sont généralement pas satisfaisants (voir exemples).

Il existe donc encore à ce jour un besoin de trouver de nouvelles voies de fabrication de polycarbonates rigides à température ambiante.
Par polycarbonate rigide à température ambiante, la demanderesse entend un polycarbonate présentant une température de transition vitreuse supérieure ou égale à 50°C.
En particulier, il est avantageux de trouver des procédés générant des composés moins toxiques que ceux habituellement générés lors des procédés classiques de synthèse.
Il est également avantageux que ce procédé utilise des réactifs peu toxiques.

Au cours de ses recherches, la Demanderesse a réussi la mise au point d'un nouveau procédé d'obtention de polycarbonate comprenant des motifs issus de dérivés particuliers de dianhydrohexitols, ledit polycarbonate présentant un caractère rigide, tout en répondant à au moins un des problèmes exposés ci-dessus.
En effet, en utilisant le procédé selon l'invention, il est possible de ne pas générer de phénol lors du procédé de fabrication, mais des alcools moins toxiques.
De plus, le procédé permet de s'affranchir également de l'utilisation de réactifs toxiques tels que le phosgène et ses dérivés.
Ce nouveau procédé comprend une réaction de polycondensation par transestérification entre un dérivé de dianhydrohexitol de type dicarbonate alkylique et un diol cyclique.
Les polycarbonates ainsi formés peuvent être utilisés dans tout type d'application, y compris dans les applications les plus exigeantes.

L'invention a ainsi pour objet un procédé de fabrication d'un polycarbonate, présentant une température de transition vitreuse supérieure ou égale à 50°C comprenant :
▪ une étape (1) d'introduction, dans un réacteur, d'un monomère (A) de formule : 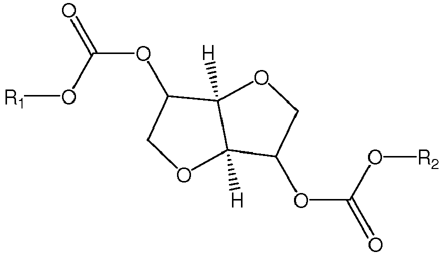 R1 et R2 étant des groupements alkyle identiques ou différents ;
▪ une étape (2) d'introduction, dans le réacteur, d'au moins un diol cyclique ou d'un mélange de diols (B) comprenant au moins 20% en moles de diol cyclique ;
▪ une étape (3) ultérieure de polycondensation par transestérification du mélange de monomères comprenant les monomères (A) et (B) ;
▪ une étape (4) de récupération du polycarbonate formé lors de l'étape (3).

De manière surprenante, la Demanderesse est parvenue à trouver un nouveau procédé de fabrication de polycarbonates rigides à température ambiante, présentant les avantages déjà exposés. En particulier, ce procédé permet d'obtenir un rendement amélioré par rapport aux procédés déjà décrits utilisant un dianhydrohexitol et un dialkylcarbonate en lieu et place du monomère (A).

Les groupements alkyle R1 et R2 portés par (A) peuvent comprendre de 1 à 10 atomes de carbone, avantageusement de 1 à 6, par exemple de 1 à 4, tout particulièrement sont choisis parmi les groupements méthyle et éthyle.

Avantageusement, (B) est un mélange de diols comprenant, par rapport au nombre total de diols, au moins 50% en moles d'un diol cyclique ou d'un mélange de diols cycliques, préférentiellement au moins 80%, tout préférentiellement est constitué d'un diol cyclique ou d'un mélange de diols cycliques.

Préférentiellement, le diol cyclique ou les diols cycliques sont choisis parmi :
▪ les bisphénols tels que le 2,2-bis(4-hydroxyphényl)propane (bisphénol A), le 2,2-bis(3,5-diméthyl-4-hydroxyphényl)propane, le bis(4-hydroxyphényl)méthane (bisphénol F), le 1,1-bis(4-hydroxyphényl)cyclohexane (bisphénol C) et le 1,1-bis(4-hydroxyphényl)éthane ([bisphénol AD) ;
▪ les dianhydrohexitols tels que l'isosorbide, l'isomannide et l'isoidide ;
▪ les cyclohexanediméthanols tels que le 1,2-cyclohexanediméthanol, le 1,3-cyclohexanediméthanol, et le 1,4-cyclohexanediméthanol ;
▪ les tricyclodécanediméthanols ;
▪ les pentacyclopentanediméthanols ;
▪ les décalindiméthanols tels que le 2,6-décalindiméthanol, le 1,5-décalindiméthanol et le 2,3-décalindiméthanol ;
▪ les norbornanediméthanols tels que le 2,3-norbornanediméthanol et le 2,5-norbornanediméthanol ;
▪ les adamantanediméthanols tels que le 1,3-adamantanediméthanol ;
▪ les cyclohexanediols tels que le 1,2-cyclohexanediol, le 1,3-cyclohexanediol et le 1,4-cyclohexanediol ;
▪ les tricyclodécanediols ;
▪ les pentacyclopentadecanediols ;
▪ les décalindiols ;
▪ les norbornanediols ;
▪ et les adamantanediols.

Le diol cyclique est de préférence non aromatique. Préférentiellement, le diol cyclique est choisi parmi l'isosorbide, l'isomannide et l'isoidide, le 1,2-cyclohexanediméthanol, le 1,3-cyclohexanediméthanol, et le 1,4-cyclohexanediméthanol, préférentiellement l'isosorbide.

Avantageusement, (A) est un dialkylcarbonate d'isosorbide.

Selon une variante du procédé selon l'invention, celui-ci comprend une étape (1') d'introduction d'un monomère (C) de formule :

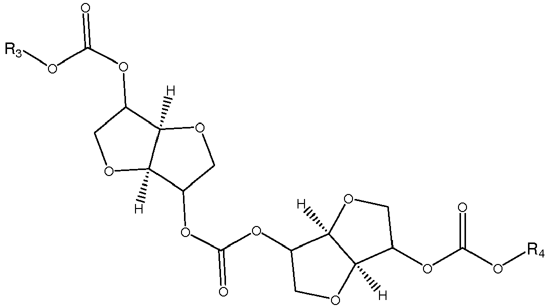

R3 et R4 étant des groupements alkyle identiques ou différents, comprenant par exemple de 1 à 10 atomes de carbone, avantageusement de 1 à 6, préférentiellement de 1 à 4, tout particulièrement sont choisis parmi les groupements méthyle et éthyle.

Les quantités molaires en monomères (A), (B) et (C) introduits sont avantageusement, par rapport à leur nombre total :
▪ de 1 à 60% de (A), préférentiellement de 39% à 59% ;
▪ de 40 à 60% de (B) ;
▪ et de 0 à 39% de (C), préférentiellement de 1 à 10%, la somme de (A), (B) et (C) faisant 100%.

Préférentiellement, (A), (B) et (C) constituent plus de 90% en moles de la totalité des monomères introduits dans le réacteur.

L'invention porte sur un procédé utilisant un mélange particulier de monomères (A), (B) et éventuellement (C). Le type et les conditions de transestérification condensation ne sont pas particulièrement limités. Cependant, l'étape (3) se fait avantageusement en présence d'un catalyseur connu de polycondensation par transestérification, avantageusement un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.
Préférentiellement, le catalyseur est choisi parmi les catalyseurs comprenant au moins un ion de métal alcalin, les catalyseurs comprenant un composé azoté cyclique et les catalyseurs comprenant un ion ammonium quaternaire, tels que le carbonate de césium, les triazoles, l'hydroxyde de tetraméthylammonium, tout préférentiellement le carbonate de césium.

La quantité molaire de catalyseur éventuel, par rapport à la quantité de (A) et de (C) éventuel, va avantageusement de 10⁻⁷% à 1%, préférentiellement de 10⁻⁴% à 0,5%.

Avantageusement, l'étape (3) du procédé selon l'invention est réalisée sous atmosphère inerte, par exemple sous azote.

Au moins une partie de l'étape (3) du procédé selon l'invention peut être réalisée à une température allant de 100°C à 250°C, préférentiellement de 150 à 235°C.

Selon un mode avantageux de réalisation du procédé, au moins une partie de l'étape (3) est réalisée à une pression allant de 30 kPa à 110kPa, avantageusement de 50 à 105 kPa, préférentiellement de 90 à 105 kPa, par exemple à pression atmosphérique.
En effet, selon les procédés classiques, on doit réaliser la réaction de transestérification condensation sous vide assez important, généralement à une pression de 20 kPa maximum, pour pouvoir la conduire de manière satisfaisante. Le procédé de l'invention présente l'avantage de travailler sous vide peu important.

Le polycarbonate récupéré à l'étape (4) présente avantageusement une température de transition vitreuse allant de 90 à 180°C, par exemple de 110 à 170°C. Le polycarbonate peut atteindre cette température de transition vitreuse lorsque (A) est un dialkylcarbonate d'isosorbide et (B) une composition de diols comprenant au moins 80% d'isosorbide.

Le polycarbonate peut présenter un module de Young à 25°C allant de 1000 à 4000MPa. Il présente avantageusement une masse molaire moyenne en poids supérieure ou égale à 5000 g/mol, préférentiellement allant de 8000 à 200000 g/mol. Comme expliqué ci-après dans la description détaillée, l'homme du métier peur faire varier la température de transition vitreuse du polycarbonate notamment en sélectionnant (B) de manière adéquate.
L'invention va être décrite plus en détail ci-dessous.

Par polycarbonate selon la présente invention, on entend tout polymère comprenant des motifs répétitifs, formés par la réaction de monomères, liés par des liaisons carbonate et en particulier les motifs répétitifs décrits ci-dessus. Ces motifs répétitifs sont formés par réaction de (A) et de (B) déjà présentés.
Le polycarbonate peut présenter uniquement des motifs répétitifs liés par des liaisons carbonate ; il peut également s'agir d'un copolymère présentant des motifs répétitifs liés par des liaisons carbonate et des motifs répétitifs liés par d'autres liaisons telles que les liaisons ester d'acide carboxylique ou uréthane.

Par « monomère », on entend dans la présente demande un composé présentant au moins deux fonctions susceptibles de réagir avec une fonction alcool ou une fonction carbonate d'alkyle dans une réaction de transestérification condensation.

Lorsqu'ils sont associés au terme « monomère » ou « dimère », les nombres « un » », « deux » ou « plusieurs » signifient dans la présente demande le nombre de monomères de type différents. A titre d'exemple, lorsqu'on utilise le terme monomère ou diol au singulier, cela ne signifie bien évidemment pas qu'une seule molécule est introduite ou réagit mais que plusieurs molécules d'un même type sont introduites ou réagissent.

Comme expliqué précédemment, l'invention concerne un procédé de fabrication de polycarbonate par polycondensation des monomères (A) et (B).
On peut également introduire le monomère (C) selon une variante. (C) peut être un dimère de (A). Selon le dianhydrohexitol utilisé, on peut obtenir une ou plusieurs conformations de dimères (C).

(A) est placé dans le réacteur lors de l'étape d'introduction (1). Le monomère (A) peut être choisi parmi le dialkylcarbonate d'isosorbide, le dialkylcarbonate d'isomannide et le dialkylcarbonate d'isoidide.

Le monomère (A) peut être obtenu en utilisant par exemple les procédés déjà connus de fabrication de dialkylcarbonate de dianhydrohexitol.

On peut par exemple fabriquer le monomère (A) par réaction de dianhydrohexitol et de chloroformiate d'alkyle, ces réactifs étant introduits dans un réacteur dans des proportions molaires de 1 : 2. Ce type de procédé est décrit par exemple dans le document JP 6-261774 à l'exemple 5. La Demanderesse a pu constater que, selon ce procédé, on ne forme que du dialkykcarbonate de dianhydrohexitol et aucun dimère.
On peut fabriquer le monomère (C) en faisant réagir par exemple dans une première étape une mole de dianhydrohexitol avec une mole de chloroformiate d'alkyle afin de former du monoalkylecarbonate de dianhydrohexitol, puis dans une seconde étape une mole de phosgène avec deux moles du monoalkylecarbonate de dianhydrohexitol formé lors de la première étape.

Une possibilité de fabriquer les monomères (A) et (C) est d'utiliser un procédé permettant leur synthèse simultanée. En effet, la Demanderesse a également mis au point un procédé permettant de fabriquer un tel mélange. Ce procédé est décrit en détail dans la demande internationale n°PCT/FR2010/052066.
Ce procédé de préparation comprend, dans l'ordre, les étapes suivantes :
(a) préparation d'un mélange réactionnel initial contenant
   - au moins un dianhydrohexitol,
   - au moins 2 équivalents en moles, rapportés à la quantité de dianhydrohexitol présent, d'au moins un carbonate de dialkyle, et
   - un catalyseur de transestérification comme par exemple le carbonate de potassium,
(b) chauffage du mélange réactionnel jusqu'à une température supérieure ou égale à la température d'ébullition de l'alcool R-OH formé par la réaction de transestérification, ou supérieure ou égale à la température d'ébullition du mélange azéotropique que forme l'alcool R-OH obtenu avec un autre des composants présents dans le mélange réactionnel, et au plus égale à la température d'ébullition du mélange réactionnel, dans un réacteur muni d'une colonne de rectification comportant un nombre de plateaux théoriques de distillation suffisant pour séparer du mélange réactionnel l'alcool obtenu, ou l'azéotrope qu'il forme avec un autre des composants présents dans le mélange réactionnel.

La solution obtenue à la fin du procédé comprend un mélange de monomères (A) et (C) avec du carbonate de dialkyle. On réalise une distillation et on récupère le mélange de (A) et (C) exempt de carbonate de dialkyle.
On peut faire varier le ratio (A) / (C) en modifiant le mélange réactionnel initial : celui-ci contient avantageusement de 2,1 à 100 équivalents molaires, de préférence de 5 à 60 équivalents molaires, et en particulier de 10 à 40 équivalents molaires de carbonate de dialkyle, rapportés à la quantité de dianhydrohexitol présent initialement dans le milieu réactionnel. Plus la quantité en carbonate de dialkyle est élevée, plus le ratio (A) / (C) dans la solution de monomères obtenus est également élevé.

Par exemple, la Demanderesse a constaté qu'en faisant réagir de l'isosorbide et du carbonate de diméthyle en présence de carbonate de potassium dans les conditions du procédé décrit ci-dessus, on pouvait obtenir une solution de monomères comprenant (A) et (C) avec un ratio (A) / (C) allant d'environ 4 (lorsque le ratio carbonate de dialkyle /isosorbide est de 10) à environ 20 (lorsque le ratio carbonate de dialkyle /isosorbide est de 40).
On peut ensuite séparer les monomères (A) et (C) par des techniques de distillation sous vide, par exemple en utilisant un évaporateur à film raclé.

Ce procédé de synthèse simultanée de (A) et (C) présente les avantages d'utiliser des réactifs moins toxiques que le chloroformiate d'alkyle utilisé dans le procédé décrit dans le document JP 6-261774 par exemple ; les co-produits de synthèse sont également moins toxiques que les espèces chlorées émises lors de la synthèse avec du chloroformiate (méthanol dans le cas où l'alkyle est un méthyle, éthanol dans le cas où l'alkyle est un éthyle).

Le monomère (B) est, quant à lui, un diol cyclique, un mélange de diols cycliques ou un mélange de diols comprenant au moins 20% en moles de diol cyclique.
Le diol cyclique peut comprendre un ou plusieurs cycles, par exemple de 2 à 4 cycles, préférentiellement 2 cycles. Chaque cycle comprend préférentiellement de 4 à 10 atomes. Les atomes compris dans les cycles peuvent être choisis parmi le carbone, l'oxygène, l'azote ou le soufre. Préférentiellement, les atomes constitutifs du cycle sont le carbone ou le carbone et l'oxygène.
Le diol cyclique peut être aromatique ou non aromatique. Les diols aromatiques comprennent préférentiellement de 6 à 24 atomes de carbone.
Le diol cyclique non aromatique peut comprendre de 4 à 24 atomes de carbone, avantageusement de 6 à 20 atomes de carbone.

Selon la variante où (B) est un mélange de diols comprenant au moins 20% en moles de diols cycliques, on peut utiliser, avec le ou les diols cycliques, des diols non cycliques tels que les diols alkyliques linéaires ou ramifiés. Ce diol non cyclique peut comprendre de 2 à 10 atomes de carbone, comme par exemple l'éthylène glycol, le 1,3-propanediol, le 1,4-butanediol, le 1,5-pentanediol, le 1,6-hexanediol, le 1,7-heptanediol, le 1,8-octanediol, le 1,9-nonanediol ou le 1,10-décanediol.

Il est possible d'introduire selon le procédé de l'invention des monomères autres que (A), (B) et éventuellement (C). On peut par exemple introduire des monomères comprenant plus de 2 fonctions alcool ou carbonate d'alkyle. On peut également introduire des monomères comprenant plusieurs fonctions choisies parmi la fonction acide carboxylique, ester d'acide carboxylique, amine ou des mélanges de ces fonctions. On peut également introduire d'autres monomères tels que du monoalkylcarbonate de dianhydrohexitol, des oligomères de (A) de degré de polymérisation supérieur ou égal à 3. Il est également possible d'introduire d'autres produits ou encore d'autres produits tels que du dialkyléther de dianhydrohexitol, du monoalkyléther de dianhydrohexitol ou du monoalkyléther de dianhydrohexitol monoalkylcarbonate qui peuvent être des co-produits de synthèse de (A) ou (C). Il est également possible d'introduire des agents de terminaison de chaîne, qui sont des composés ne comprenant qu'une seule fonction susceptible de réagir avec une fonction alcool ou carbonate.

Cependant, sur la totalité des monomères introduits dans le réacteur, on préfère que la somme de (A), (B) et (C) constitue plus de 90% en moles de la totalité des monomères introduits, avantageusement plus de 95%, voire plus de 99%. Tout préférentiellement, les monomères introduits dans le réacteur sont essentiellement constitués des monomères (A), (B) et (C). Bien évidemment, on préfère limiter la quantité de carbonate de diaryle et de monomères halogénés introduits, par exemple à des quantités inférieures à 5% du nombre total de moles de monomères introduites. Dans un mode de réalisation particulièrement préféré, on n'introduit aucun monomère choisi parmi les carbonates de diaryle et les monomères halogénés.

L'ordre des étapes d'introduction (1), (2) et éventuellement (1') n'a pas d'importance. On peut réaliser l'étape (1) avant l'étape (2) ou vice versa. On peut également réaliser ces deux étapes simultanément. Selon une variante, on réalise un prémélange des monomères (A), (B) et éventuellement (C) avant de les introduire dans le réacteur. Lorsque l'on utilise le monomère éventuel (C) dans le procédé, on peut l'introduire en mélange avec (A). Ce mélange peut être par exemple fait directement selon le procédé de synthèse décrit dans la demande internationale n°PCT/FR2010/052066. Dans le cas où on introduit des mélanges de monomères, la quantité de chacun de ces monomères peut être déterminée par des méthodes chromatographiques, comme par exemple la Chromatographie en Phase Gaseuse (CPG).
Par exemple, pour déterminer les quantités en (A) et (C) d'un mélange, on peut mesurer les quantités de chacun des constituants par CPG en faisant l'analyse sous forme de dérivés triméthylsilylés.
L'échantillon peut être préparé selon la méthode suivante : dans un bécher, peser 500 mg d'échantillon et 50 mg de glucose pentaacétate (étalon interne) de pureté connue. Ajouter 50 ml de pyridine et laisser agiter jusqu'à dissolution complète. Reprendre 1 ml dans un godet, ajouter 0,5 ml de bis-(triméthylsilyl)-trifluoroacétamide puis chauffer 40 minutes à 70°C.
Pour réaliser le chromatogramme, on peut utiliser un chromatographe VARIAN 3800 muni :
- d'une colonne DB1 d'une longueur de 30 m et de 0,32 mm de diamètre avec une épaisseur de film de 0,25 µm,
- d'un injecteur de type 1177 équipé d'un focus liner avec laine de verre et chauffé à 300°C en utilisant un rapport de split de 30, le débit d'hélium étant de 1,7 mL/min,
- d'un détecteur FID chauffé à une température de 300°C réglé avec une sensibilité de 10⁻¹¹.

On peut introduire, en mode split, 1,2 µL de l'échantillon dans le chromatographe, la colonne étant chauffée de 100°C jusqu'à 320°C avec une rampe de 7°C/min puis un palier de 15 min à 320°C. Dans ces conditions d'analyse, lorsque (A) est un diméthylcarbonate d'isosorbide et (C) des dimères de (A), (A) a un temps de rétention relatif d'environ 0,74, (C) a un temps de rétention relatif allant d'environ 1,34 à 1,79, l'étalon interne ayant un temps de rétention d'environ 15,5 minutes.
A l'aide du chromatogramme, on peut calculer le pourcentage massique de chacun des constituants en déterminant la surface des pics correspondants et en calculant, pour chaque constituant, le rapport de la surface du pic lui correspondant sur la surface totale de l'ensemble des pics (à l'exception du pic de l'étalon interne).

Pour permettre la formation du polycarbonate selon le procédé de l'invention, le monomère (A) réagit avec le monomère (B) et éventuellement (C) par une réaction de transestérification, cette réaction étant conduite dans un réacteur. Cette réaction peut se faire en l'absence de catalyseur. Cependant, la présence d'un catalyseur approprié permet d'accélérer la réaction et/ou d'augmenter le degré de polymérisation du polycarbonate ainsi formé pendant l'étape (3).
En ce qui concerne le catalyseur de transestérification éventuellement utilisé lors de l'étape (3), il peut s'agir d'un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.
A titre d'exemple de catalyseur comprenant au moins un ion de métal alcalin, on peut citer les sels de césium, de lithium, de potassium ou de sodium. Ces sels peuvent être en particulier des carbonates, des hydroxydes, des acétates, des stéarates, des borohydrures, des borures, des phosphates, des alcoolates ou des phénolates ainsi que leurs dérivés.
Comme catalyseur comprenant au moins un ion de métal alcalino-terreux, on peut citer les sels de calcium, de baryum, de magnésium ou de strontium. Ces sels peuvent être en particulier des carbonates, des hydroxydes, des acétates ou des stéarates ainsi que leurs dérivés.
En ce qui concerne les composés basiques à base de bore, il s'agit préférentiellement de sels de dérivés alkyliques ou phényliques de bore tels que le tétraphényle de bore.
Les catalyseurs comprenant des composés basiques à base de phosphore peuvent être des phosphines.

Les catalyseurs comprenant un ion ammonium quaternaire sont préférentiellement des hydroxydes tels que l'hydroxyde de tetraméthylammonium.
Les catalyseurs comprenant un composé azoté cyclique sont préférentiellement des dérivés triazole, tetrazole, pyrrole, pyrimidine, pyrazine, pyridazine, picoline, piperidine, pyridine, aminoquinoléine ou imidazole.
Par rapport à la quantité de (A) et éventuellement (C), la quantité molaire de catalyseur va avantageusement de 10⁻⁷% à 1%, préférentiellement de 10⁻⁴% à 0,5%. Sa quantité peut être réglée en fonction du catalyseur utilisé. A titre d'exemple, on utilise préférentiellement de 10⁻³ à 10⁻¹% de catalyseur comprenant au moins un ion de métal alcalin.

On peut éventuellement ajouter aux monomères (A), (B) et (C) des additifs tels que les stabilisants.
Le stabilisant peut être par exemple un composé à base d'acide phosphorique tel que les phosphates de trialkyle, à base d'acide phosphoreux tels que les dérivés phosphites ou phosphates, ou un sel de ces acides par exemple les sels de zinc ; ce stabilisant permet de limiter la coloration du polymère durant sa fabrication. Son usage peut être avantageux en particulier lorsqu'on réalise la polycondensation à l'état fondu. Cependant, la quantité d'agent stabilisant est généralement inférieure à 0,01% du nombre total de moles de monomères (A), (B) et (C).

Dans le procédé de fabrication de polycarbonate selon l'invention, on réalise l'étape de polycondensation des monomères (A), (B) et (C) éventuel lors de l'étape (3). Le type et les conditions de polymérisation ne sont pas particulièrement limités.

On peut réaliser cette réaction à l'état fondu, c'est-à-dire en chauffant le milieu réactionnel en l'absence de solvant. On peut également réaliser cette polymérisation en présence de solvant. On réalise de préférence cette réaction à l'état fondu.
Cette étape (3) est réalisée pendant un temps suffisant pour obtenir un polycarbonate. Avantageusement, la durée de l'étape (3) va de 1 heure à 24 heures, par exemple de 2 à 12 heures. Préférentiellement, le réacteur est thermorégulé durant l'étape (3) à une température allant de 100°C à 250°C, préférentiellement de 150 à 235°C.
Il est possible de conduire l'ensemble de l'étape (3) en isotherme. Cependant, on préfère généralement augmenter la température durant cette étape, soit par palier de température, soit en utilisant une rampe de température. Cette augmentation de température durant l'étape (3) permet d'améliorer le degré d'avancement de la réaction de polycondensation par transestérification et d'augmenter ainsi la masse moléculaire du polycarbonate finalement obtenu, celui-ci présentant de plus une coloration plus faible que lorsque l'on réalise l'ensemble de l'étape (3) du procédé à sa température la plus haute.
On préfère bien entendu réaliser l'étape (3) sous atmosphère inerte, par exemple sous azote.

En utilisant les procédés classiques générant du phénol pendant la réaction de transestérification condensation, on doit, pour pouvoir éliminer ce phénol du milieu réactionnel, faire l'ensemble de la réaction sous vide. Pour éliminer les alcools générés lors du procédé selon l'invention, le vide dans le réacteur n'est pas nécessaire car on peut distiller les alcools générés plus aisément que le phénol.

Le procédé selon l'invention présente ainsi l'avantage que l'étape de polycondensation par transestérification ne se fait pas nécessairement sous vide important. Ainsi, selon une variante du procédé de l'invention, au moins une partie de l'étape (3) est réalisée à une pression allant de 30 kPa à 110kPa, avantageusement de 50 à 105 kPa, préférentiellement de 90 à 105 kPa, par exemple à pression atmosphérique. Préférentiellement, au moins la moitié de la durée totale de l'étape (3) est réalisée à cette pression.

On peut cependant réaliser l'étape (3), pendant toute la durée ou pendant une partie sous vide un peu plus poussé, par exemple avec une pression à l'intérieur du réacteur comprise entre 100 Pa et 20 kPa. Bien évidemment, ce vide est réglé selon la température à l'intérieur du réacteur et le degré de polymérisation : lorsque le degré de polymérisation est bas, en cas de pression trop faible et de température trop élevée, la réaction ne peut pas se faire correctement car les monomères sont extraits du réacteur par distillation. Cette étape de vide un peu plus poussé peut être réalisée en fin de réaction, ce qui permet de plus d'éliminer une partie des espèces résiduelles.

A titre d'exemple, on peut réaliser le procédé en réalisant les différentes étapes successives suivantes :
- une première étape pendant 2 heures et 30 minutes à 170°C sous pression atmosphérique ;
- une seconde étape pendant 1 heure à 200°C sous pression atmosphérique ;
- une troisième étape pendant 1 heure à 220°C sous pression atmosphérique ;
- une quatrième étape pendant 1 heure à 235°C sous pression atmosphérique ;
- une cinquième étape pendant 1 heure à 235°C à une pression d'environ 300 Pa.

Le réacteur est généralement équipé d'un moyen d'élimination des alcools générés au cours de la réaction de polycondensation par transestérification, par exemple une tête de distillation reliée à un condenseur.

Le réacteur est généralement équipé d'un moyen d'agitation tel qu'un système d'agitation à pales.

Les monomères (A) et (B) réagissent de manière statistique durant l'étape (3). Lorsque l'on réalise une seule introduction du monomère (B), on obtient donc un polycarbonate avec une répartition statistique des diols (B) dans le polymère. Toutefois, il est possible de réaliser une ou plusieurs étapes d'introductions supplémentaires de monomères (B), ceci après le démarrage de l'étape de transestérification condensation (3).

On peut réaliser le procédé de façon discontinue (par « batch »), de façon continue, ou de façon semi-continue semi-discontinue.

On récupère le polycarbonate formé lors du procédé lors de l'étape (4). Ce polycarbonate peut être directement transformé sous forme de granulés à l'aide d'un granulateur ou sous toute autre forme. Il est également possible d'effectuer une purification du polymère ainsi obtenu dans une étape ultérieure à l'étape (4), par exemple par dissolution du polymère dans un solvant tel que le chloroforme puis précipitation par ajout d'un non solvant tel que le méthanol.

La température de transition vitreuse du polycarbonate formé est supérieure ou égale à 50°C. On peut ajuster la température de transition vitreuse du polycarbonate en sélectionnant les conditions de synthèse lors du procédé. La Demanderesse a ainsi observé qu'en sélectionnant un ratio molaire des monomères (A)/(B) sensiblement égal à 1 il était possible d'obtenir des polycarbonates ayant les températures de transition vitreuses les plus élevées. Lorsqu'on s'éloigne de l'équimolarité (A/B = 1), la température de transition vitreuse diminue. La température de transition vitreuse varie également de manière très significative avec le choix du monomère (B) sélectionné. En effet, si l'on souhaite obtenir un polycarbonate présentant une température sensiblement élevée, on préfère utiliser, au moins en partie, des diols cycliques plutôt que des diols linéaires.
La température de transition vitreuse peut être mesurée par analyse calorimétrique différentielle. Par exemple, on utilise un appareil de type Mettler DSC 30, équipé de creusets en aluminium, calibré en température et flux de chaleur avec de l'indium (par exemple réf 119441). On pèse environ 15 mg de l'échantillon dans un creuset en aluminium percé. On peut procéder de la manière suivante : Le creuset est introduit dans le four sous flux d'azote, à la température de 25°C.
Une rampe de refroidissement rapide est appliquée de 25°C à -100°C.
Une rampe de chauffage à 10°C/min est appliquée de -100°C à 200°C.
Une nouvelle rampe de refroidissement rapide est appliquée de 200°C à -100°C.

Une deuxième rampe de chauffage est appliquée à 10°C/min de -100°C à 200°C.
La température de transition vitreuse est donnée par la température du point milieu, selon la méthode des 3 tangentes.

Grâce au procédé de l'invention, on peut obtenir un rendement massique, défini par le rapport de la masse de polycarbonate récupérée sur la masse de la somme des monomères mis en oeuvre, supérieur ou égal à 40%, avantageusement supérieur à 50%, de préférence supérieur à 55%.

Des modes de réalisation vont maintenant être détaillés dans les exemples qui suivent. Il est précisé que ces exemples illustratifs ne limitent d'aucune façon la portée de la présente invention.

### Exemples

### Préparation des monomères

Le diméthylcarbonate d'isosorbide (monomère A) et le dimère de diméthylcarbonate d'isosorbide (monomère C) utiles au procédé de fabrication de polycarbonate selon l'invention sont obtenus selon les protocoles décrits ci-après.

### Synthèse 1

On introduit dans un réacteur d'une capacité de 20 litres, chauffé par un bain thermostaté à fluide caloporteur, muni d'un système d'agitation mécanique à pale, d'un système de contrôle de la température du milieu réactionnel et d'une colonne de rectification surmontée d'une tête de reflux, 800 g d'isosorbide (5,47 mol) puis 9862 g de carbonate de diméthyle (= 20 équivalents de carbonate de diméthyle) et 2266 g de carbonate de potassium. On chauffe le mélange réactionnel pendant une heure à reflux total, temps au bout duquel la température des vapeurs en tête de colonne atteint 64°C, avant de débuter l'élimination du méthanol formé. On maintient ensuite le chauffage du milieu réactionnel à une température comprise entre 68 °C et 75 °C pendant 13 heures, temps au bout duquel la température des vapeurs en tête de colonne atteint 90 °C et se stabilise à cette température (point d'ébullition du carbonate de diméthyle). C'est le signe que la réaction de transestérification est terminée et qu'il ne se forme plus de méthanol. On filtre le milieu réactionnel afin d'en éliminer le carbonate de potassium en suspension. Après distillation du carbonate de diméthyle en excès, on récupère un solide blanc qui contient 91,5 % de diméthylcarbonate d'isosorbide (DMCI) et 8,5 % de dimères, ces pourcentages étant déterminés par CPG. Le solide est exempt d'isosorbide n'ayant pas réagi.

### Synthèse 2

On répète la Synthèse 1 avec la seule différence que l'on utilise 10 équivalents de carbonate de diméthyle. Après distillation du carbonate de diméthyle en excès, on récupère un solide blanc qui contient 79 % de diméthylcarbonate d'isosorbide (DMCI) et 21 % de dimères, ces pourcentages étant déterminés par CPG. Le solide est exempt d'isosorbide n'ayant pas réagi.

### Synthèse 3

On distille sous vide poussé (<1mBar) une partie du produit obtenu selon la Synthèse 1 sur un évaporateur à film raclé en configuration « short patch ». L'évaporateur est chauffé à 140°C et le produit est introduit à 70°C avec un débit de 140 g/h.
Le distillat obtenu est un solide blanc contenant 100% en poids de diméthylcarbonate d'isosorbide et ne contient aucune trace de dimères.

### Préparation de polycarbonates

### Exemple 1

On introduit, dans un réacteur d'une capacité de 100 ml, chauffé par un bain thermostaté à fluide caloporteur, muni d'un système d'agitation mécanique à pale, d'un système de contrôle de la température du milieu réactionnel, d'une tubulure d'introduction d'azote, d'une tête de distillation reliée à un condenseur et à un récipient pour recueillir les condensats, et d'un système de mise sous vide avec régulation, une quantité de 42.5 g (0.162 mole) de diméthylcarbonate d'isosorbide (A), 23.7 g (0.162 mole) d'isosorbide (B), soit un ratio molaire (A) / (B) de 1 pour 1, et 0,0112 g (1.62 x10⁻⁴ mole) de 1, 2, 4 triazole. On met l'installation sous atmosphère d'azote et on chauffe le milieu réactionnel par l'intermédiaire du fluide caloporteur. On monte progressivement la température en effectuant des paliers de 2h30 mn à 170°C, 1h à 200°C, 1h à 220°C et 1h à 235°C. La montée en température entre chaque palier se fait en 30 minutes. Au cours de la réaction, on observe une distillation du méthanol. A la fin du palier de 235°C, on met l'installation sous vide pendant 1h (pression résiduelle inférieure à 300 Pascal), en maintenant la température à 235°C, afin de poursuivre la distillation et éliminer les espèces résiduelles de bas poids moléculaire. Après refroidissement du milieu réactionnel, on obtient un polymère de transition vitreuse de 90°C.
Les conditions opératoires sont reprises dans le tableau 1 ci-après.

### Exemple 2

On répète l'exemple 1 avec la seule différence que le diméthylcarbonate d'isosorbide (A) contient 21% en poids de dimères (C), en conservant un ratio molaire ((A) + (C)) / (B) de 1 pour 1.
On obtient un polymère présentant une température de transition vitreuse de 120°C.
Les conditions opératoires sont reprises dans le tableau 1 ci-après.

### Exemple 3

On répète l'exemple 2 avec la seule différence que l'on remplace l'isosorbide par l'isoidide, en conservant un ratio molaire ((A) + (C)) / (B) de 1 pour 1.
On obtient un polymère présentant une température de transition vitreuse de 85°C.
Les conditions opératoires sont reprises dans le tableau 1 ci-après.

### Exemple 4

On répète l'exemple 2 avec la seule différence que l'on remplace l'isosorbide par l'isomannide, en conservant un ratio molaire ((A) + (C)) / (B) de 1 pour 1.
On obtient un polymère présentant une température de transition vitreuse de 93°C.
Les conditions opératoires sont reprises dans le tableau 1 ci-après.

### Exemple 5

On répète l'exemple 2 avec la seule différence que l'on remplace l'isosorbide par le 1,4 cyclohexanedimethanol (1,4 CHDM), en conservant un ratio molaire ((A) + (C)) / (B) de 1 pour 1.
On obtient un polymère présentant une température de transition vitreuse de 51°C.
Les conditions opératoires sont reprises dans le tableau 1 ci-après.

### Exemple 6 (comparatif)

On répète l'exemple 2 avec la seule différence que l'on remplace l'isosorbide par le triéthylène glycol, en conservant un ratio molaire ((A) + (C)) / (B) de 1 pour 1. On obtient un polymère présentant une température de transition vitreuse de -1°C.
Les conditions opératoires sont reprises dans le tableau 1 ci-après.

### Exemple 7 (comparatif)

On répète l'exemple 2 avec la seule différence que l'on remplace l'isosorbide par l'éthylène glycol, en conservant un ratio molaire ((A) + (C)) / (B) de 1 pour 1. On obtient un polymère présentant une température de transition vitreuse de 20,5°C.
Les conditions opératoires sont reprises dans le tableau 1 ci-après.

**Tableau 1**

| exemples | (B) | % m (C) / ((A) + (C)) | Tᵥ (°C) |
|---|---|---|---|
| 1 | isosorbide | 0 | 90 |
| 2 | isosorbide | 21 | 120 |
| 3 | isoidide | 21 | 85 |
| 4 | isomannide | 21 | 93 |
| 5 | 1,4 CHDM | 21 | 51 |
| 6 | triéthylèneglycol | 21 | -1 |
| 7 | éthylèneglycol | 21 | 20.5 |

### Exemple 8 (comparatif)

On introduit, dans un réacteur identique à celui utilisé dans l'exemple 1, 93.0 g (0,343 mole) d'un mélange de 91,5% en poids diméthylcarbonate d'isosorbide (A) et de 8,5% en poids de dimères (C), 21.2g (0.342 moles) d'éthylèneglycol (B) soit un ratio molaire ((A)+(C))/(B) de 1 pour 1 et 0.0067 g (2.05x10⁻⁵ mole) de carbonate de césium soit 0.006% molaire par rapport à (A)+(C). On met l'installation sous atmosphère d'azote et on chauffe le milieu réactionnel par le fluide caloporteur. On monte progressivement la température en effectuant des paliers de 2h30 mn à 170°C, 1h à 200°C, 1h à 220°C et 1 h à 235°C. La montée en température entre chaque palier se fait en 30 minutes. Au cours de la réaction, on observe une distillation du méthanol. A la fin du palier de 235°C, on met l'installation sous vide pendant 1h (pression résiduelle inférieure à 300 Pascal), en maintenant la température à 235°C, afin de poursuivre la distillation et éliminer les espèces résiduelles de bas poids moléculaire. Après refroidissement du milieu réactionnel, on obtient un polymère présentant une température de transition vitreuse de 31,5°C.
Les conditions opératoires sont reprises dans le tableau 2 ci-après.

### Exemple 9

On répète l'exemple 8 avec la seule différence que l'on remplace l'éthylèneglycol par un mélange 80/20 molaire éthylène glycol / isosorbide, en conservant un ratio molaire ((A)+(C))/(B) de 1 pour 1.
On obtient un polymère présentant une température de transition vitreuse de 50°C.
Les conditions opératoires sont reprises dans le tableau 2 ci-après.

### Exemple 10

On répète l'exemple 8 avec la seule différence que l'on remplace l'éthylèneglycol par un mélange 50/50 molaire éthylèneglycol / isosorbide, en conservant un ratio molaire ((A)+(C))/(B) de 1 pour 1.
On obtient un polymère présentant une température de transition vitreuse de 76,5°C.
Les conditions opératoires sont reprises dans le tableau 2 ci-après.

### Exemple 11

On répète l'exemple 8 avec la seule différence que l'on remplace l'éthylèneglycol par un mélange 20/80 molaire éthylène glycol / isosorbide, en conservant un ratio molaire ((A)+(C))/(B) de 1 pour 1.
On obtient un polymère présentant une température de transition vitreuse de 112,5°C.
Les conditions opératoires sont reprises dans le tableau 2 ci-après.

### Exemple 12

On répète l'exemple 8 avec la seule différence que l'on remplace l'éthylèneglycol par l'isosorbide, en conservant un ratio molaire ((A)+(C))/(B) de 1 pour 1.
On obtient un polymère présentant une température de transition vitreuse de 145°C.
Les conditions opératoires sont reprises dans les tableaux 2 et 3 ci-après.

### Exemple 13

On répète l'exemple 8 avec la seule différence que l'on remplace l'éthylèneglycol par le 1,4 CHDM, en conservant un ratio molaire ((A)+(C))/(B) de 1 pour 1.
On obtient un polymère présentant une température de transition vitreuse de 68°C.
Les conditions opératoires sont reprises dans le tableau 2 ci-après.

**Tableau 2**

| Exemples | (B) | Tᵥ (°C) |
|---|---|---|
| 8 | éthylène glycol | 32 |
| 9 | 80% éthylène glycol -20% isosorbide | 50 |
| 10 | 50% éthylène glycol -50% isosorbide | 77 |
| 11 | 20% éthylène glycol -80% isosorbide | 113 |
| 12 | isosorbide | 145 |
| 13 | 1,4 CHDM | 68 |

### Exemple 14

On répète l'exemple 12 avec la seule différence que l'on utilise le 1,2,4 triazole comme catalyseur, dans des proportions de 0.1% molaire par rapport à (A)+(C), en conservant un ratio molaire ((A)+(C))/(B) de 1 pour 1.
On obtient un polymère présentant une température de transition vitreuse de 130°C.
Les conditions opératoires sont reprises dans le tableau 3 ci-après.

### Exemple 15

On répète l'exemple 12 avec la seule différence que l'on utilise l'hydroxyde de tetramethylammonium (0,1% molaire par rapport au dimethylcarbonate d'isosorbide) comme catalyseur, en conservant un ratio molaire ((A)+(C))/(B) de 1 pour 1.
On obtient un polymère présentant une température de transition vitreuse de 115°C.
Les conditions opératoires sont reprises dans le tableau 3 ci-après.

### Exemple 16

On répète l'exemple 12 avec la seule différence que l'on utilise un ratio molaire ((A)+(C)) / (B) de 0,8 pour 1. On obtient un polymère présentant une température de transition vitreuse de 125°C.
Les conditions opératoires sont reprises dans le tableau 3 ci-après.

### Exemple 17

On répète l'exemple 12 avec la seule différence que l'on utilise un ratio molaire ((A)+(C)) / (B) de 1.25 pour 1. On obtient un polymère présentant une température de transition vitreuse de 140°C.
Les conditions opératoires sont reprises dans le tableau 3 ci-après.

### Exemple 18

On répète l'exemple 17 avec la seule différence que l'on introduit un % molaire de catalyseur de 0.004%, en conservant un ratio molaire ((A)+(C))/(B) de 1,25 pour 1. On obtient un polymère présentant une température de transition vitreuse de 134°C.
Les conditions opératoires sont reprises dans le tableau 3 ci-après.

### Exemple 19

On répète l'exemple 17 avec la seule différence que l'on introduit un % molaire de catalyseur de 0.002%, en conservant un ratio molaire ((A)+(C))/(B) de 1,25 pour 1. On obtient un polymère présentant une température de transition vitreuse de 127°C.
Les conditions opératoires sont reprises dans le tableau 3 ci-après.

**Tableau 3**

| Exemples | Nature du catalyseur | Ratio molaire ((A) + (C)) / (B) | %molaire catalyseur/ (A) + (C) | Tᵥ (°C) |
|---|---|---|---|---|
| 12 | Carbonate de césium | 1.0 | 0.006 | 145 |
| 14 | 1,2,4 triazole | 1.0 | 0.1 | 130 |
| 15 | Hydroxyde de tetramethylammonium | 1.0 | 0.1 | 115 |
| 16 | Carbonate de césium | 0,8 | 0,006 | 125 |
| 17 | Carbonate de césium | 1,25 | 0,006 | 140 |
| 18 | Carbonate de césium | 1,25 | 0,004 | 134 |
| 19 | Carbonate de césium | 1,25 | 0,002 | 127 |

On constate que la température de transition vitreuse du polycarbonate de l'Exemple 12, utilisant un rapport équimolaire de A et B, est supérieure à celles des Exemples 16 et 17, utilisant un rapport (A)/(B) respectivement égal à 0,8 et 1,25.
On constate également que la température de transition vitreuse augmente globalement avec la quantité de catalyseur.

### Exemple 20

On introduit, dans un réacteur identique à celui utilisé dans l'exemple 1, 71.6 g (0.796 moles) de dimethylcarbonate (DMC), 113.5g (0.777 moles) d'isosorbide (B) soit un ratio molaire DMC /isosorbide de 1.024 pour 1 et 0.015 g (4.6x10⁻⁵ mole) de carbonate de césium soit 0.006% molaire par rapport à l'isosorbide. On met l'installation sous atmosphère d'azote et on chauffe le milieu réactionnel par le fluide caloporteur. On monte progressivement la température en effectuant des paliers de 1h à 80°C, 2h30 mn à 170°C, 1h à 200°C et 1 h à 235°C. La montée en température entre chaque palier se fait en 30 minutes. Au cours de la réaction, on observe une distillation du méthanol. A la fin du palier de 235°C, on met l'installation sous vide pendant 30 min (pression résiduelle inférieure à 300 Pascal), en maintenant la température à 235°C, afin de poursuivre la distillation et éliminer les espèces résiduelles de bas poids moléculaire. Après refroidissement du milieu réactionnel, on obtient un polymère présentant une température de transition vitreuse de 116.5°C.
Le rendement massique de synthèse obtenu est de 17%.
Les conditions opératoires sont reprises dans le tableau 4 ci-après.

### Exemple 21

On répète l'exemple 20 avec la seule différence que l'on remplace l'isosorbide par un mélange (B) 50/50 molaire 1,4 CHDM / isosorbide, en conservant un ratio molaire DMC / (Isosorbide+CHDM) de 1.025 pour 1.On obtient un polymère présentant une température de transition vitreuse de -28°C.
Le rendement massique de synthèse obtenu est de 15%.

### Exemple 22

On répète l'exemple 20 avec la seule différence que l'on remplace le palier d'1h à 80°C par un palier de 3h à 80°C. On obtient un polymère présentant une température de transition vitreuse de 70.5°C.
Le rendement massique de synthèse obtenu est de 18.5%.

**Tableau 4**

| exemples | (B) | Durée du palier à 80°C | Tᵥ (°C) | Rendement massique en % |
|---|---|---|---|---|
| 20 | isosorbide | 1 heure | 116.5 | 17 |
| 21 | 50 % isosorbide-50% CHDM | 1 heure | -28 | 15 |
| 22 | isosorbide | 3 heures | 70.5 | 18.5 |

L'essai 20 montre qu'en utilisant un procédé d'obtention de polycarbonate faisant réagir le dianhydrohexitol et un dialkyl carbonate, on peut obtenir un polycarbonate de température de transition vitreuse élevée. Toutefois, le rendement de ce procédé est très faible, ce qui est rédhibitoire pour une utilisation dans un procédé industriel.
Même en augmentant les durées de fabrication du polymère, on ne parvient pas à augmenter de manière satisfaisante ce rendement. L'essai 22 montre même que cette augmentation de la durée a un impact négatif sur la température de transition vitreuse du polycarbonate obtenu.
De plus, lorsque l'on utilise un diol cyclique supplémentaire autre que les dianhydrohexitols tel que le CHDM, le polycarbonate formé présente dans tous les cas une très faible température de transition vitreuse.

### Exemple 23

On introduit, dans un réacteur identique à celui utilisé dans l'exemple 1, 67 g (0,256 moles) de diméthylcarbonate d'isosorbide (A), 36.9g (0,256 moles) de 1,4 CHDM (B) soit un ratio molaire (A)/(B) de 1 pour 1 et 0.0050 g (1.53x10⁻⁵mole) de carbonate de césium soit 0.006% molaire par rapport à (B). On met l'installation sous atmosphère d'azote et on chauffe le milieu réactionnel par le fluide caloporteur. On monte progressivement la température en effectuant des paliers de 1h à 80°C, 2h30 mn à 170°C, 1h à 200°C et 1 h à 235°C. La montée en température entre chaque palier se fait en 30 minutes. Au cours de la réaction, on observe une distillation du méthanol. A la fin du palier de 235°C, on met l'installation sous vide pendant 1h (pression résiduelle inférieure à 300 Pascal), en maintenant la température à 235°C, afin de poursuivre la distillation et éliminer les espèces résiduelles de bas poids moléculaire. Après refroidissement du milieu réactionnel, on obtient un polymère présentant une température de transition vitreuse de 61.0°C.
Le rendement massique de synthèse obtenu est de 64%.
Les conditions opératoires sont reprises dans le tableau 5 ci -après.

### Exemple 24

On répète l'exemple 23 avec la seule différence que l'on remplace le 1,4 CHDM par l'isosorbide (B), en conservant un ratio molaire A / B de 1.025 pour 1. On obtient un polymère présentant une température de transition vitreuse de 119°C.
Le rendement massique de synthèse obtenu est de 59%.

**Tableau 5**

| exemples | comonomère | (B) | Tᵥ (°C) | Rendement massique en % |
|---|---|---|---|---|
| 23 | Dimethylcarbonate d'isosorbide (A) | 1,4 CHDM | 61 | 64 |
| 24 | Dimethylcarbonate d'isosorbide (A) | isosorbide | 119 | 59 |

Ces essais montrent qu'à l'aide du procédé selon l'invention, on peut obtenir des polycarbonates présentant une température de transition vitreuse élevée, tout en obtenant un excellent rendement de polycondensation, en utilisant un procédé mettant en oeuvre des dialkyl carbonates de dianhydrohexitol en lieu et place de dialkyl carbonate et de dianhydrohexitol.
En utilisant les mêmes conditions de polycondensation, ces essais montrent que l'on peut tripler voire quadrupler le rendement de cette manière (59% pour l'essai 24 au lieu de 17% pour l'essai 20 et 64% pour l'essai 23 au lieu de 15% pour l'essai 21).
De plus, la température de transition vitreuse des polymères obtenus est plus élevée. Ceci est particulièrement marquant pour les polycarbonates utilisant des diols supplémentaires en plus des dianhydrohexitols (61°C au lieu de -28°C).

## Revendications

1. Procédé de fabrication d'un polycarbonate présentant une température de transition vitreuse supérieure ou égale à 50°C, **caractérisé en ce qu'**il comprend :
▪ une étape (1) d'introduction, dans un réacteur, d'un monomère (A) de formule : 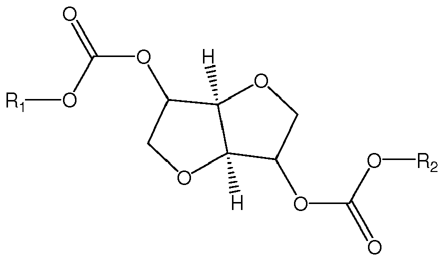 et R1 et R2 étant des groupements alkyle identiques ou différents ;
▪ une étape (2) d'introduction, dans le réacteur, d'au moins un diol cyclique ou d'un mélange de diols (B) comprenant au moins 20% en moles de diol cyclique ;
▪ une étape (3) ultérieure de polycondensation par transestérification du mélange de monomères comprenant les monomères (A) et (B) ;
▪ une étape (4) de récupération du polycarbonate formé lors de l'étape (3).

2. Procédé selon la revendication 1, **caractérisé en ce que** les groupements alkyle R1 et R2 portés par (A) comprennent de 1 à 10 atomes de carbone, avantageusement de 1 à 6, par exemple de 1 à 4, tout particulièrement sont choisis parmi les groupements méthyle et éthyle.

3. Procédé selon la revendication 1, **caractérisé en ce que** (B) est un mélange de diols comprenant, par rapport au nombre total de diols, au moins 50% en moles d'un diol cyclique ou d'un mélange de diols cycliques, préférentiellement au moins 80%, tout préférentiellement est constitué d'un diol cyclique ou d'un mélange de diols cycliques.

4. Procédé selon l'une des revendications précédentes, **caractérisé en ce que** le diol cyclique ou les diols cycliques sont choisis parmi :
▪ les bisphénols tels que le 2,2-bis(4-hydroxyphényl)propane (bisphénol A), le 2,2-bis(3,5-diméthyl-4-hydroxyphényl)propane, le bis(4-hydroxyphényl)méthane (bisphénol F), le 1,1-bis(4-hydroxyphényl)cyclohexane (bisphénol C) et le 1,1-bis(4-hydroxyphényl)éthane (bisphénol AD) ;
▪ les dianhydrohexitols tels que l'isosorbide, l'isomannide et l'isoidide ;
▪ les cyclohexanediméthanols tels que le 1,2-cyclohexanediméthanol, le 1,3-cyclohexanediméthanol, et le 1,4-cyclohexanediméthanol ;
▪ les tricyclodécanediméthanols ;
▪ les pentacyclopentanediméthanols ;
▪ les décalindiméthanols tels que le 2,6-décalindiméthanol, le 1,5-décalindiméthanol et le 2,3-décalindiméthanol ;
▪ les norbornanediméthanols tels que le 2,3-norbornanediméthanol et le 2,5-norbornanediméthanol ;
▪ les adamantanediméthanols tels que le 1,3-adamantanediméthanol ;
▪ les cyclohexanediols tels que le 1,2-cyclohexanediol, le 1,3-cyclohexanediol et le 1,4-cyclohexanediol ;
▪ les tricyclodécanediols ;
▪ les pentacyclopentadecanediols ;
▪ les décalindiols ;
▪ les norbornanediols ;
▪ et les adamantanediols.

5. Procédé selon la revendication précédente, **caractérisée en ce que** le diol cyclique est choisi parmi l'isosorbide, l'isomannide et l'isoidide, le 1,2-cyclohexanediméthanol, le 1,3-cyclohexanediméthanol, et le 1,4-cyclohexanediméthanol, préférentiellement l'isosorbide.

6. Procédé selon l'une des revendications précédentes, **caractérisé en ce qu'**il comprend une étape (1') d'introduction d'un monomère (C) de formule : 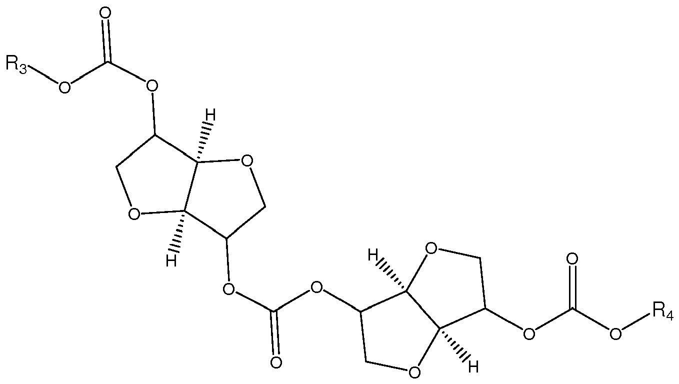 R3 et R4 étant des groupements alkyle identiques ou différents, comprenant par exemple de 1 à 10 atomes de carbone, avantageusement de 1 à 6, préférentiellement de 1 à 4, tout particulièrement sont choisis parmi les groupements méthyle et/ou éthyle.

7. Procédé selon l'une des revendications précédentes, **caractérisé en ce que** le monomère (A) est un dialkylcarbonate d'isosorbide.

8. Procédé selon l'une des revendications précédentes, **caractérisé en ce que** les quantités molaires en monomères (A), (B) et (C) introduits sont, par rapport à leur nombre total :
▪ de 1 à 60% de (A), avantageusement de 39% à 59% ;
▪ de 40 à 60% de (B) ;
▪ et de 0 à 39% de (C), avantageusement de 1 à 10% ;
la somme de (A), (B) et (C) faisant 100%.

9. Procédé selon l'une des revendications précédentes, **caractérisé en ce que** les monomères (A), (B) et (C) constituent plus de 90% en moles de la totalité des monomères introduits dans le réacteur.

10. Procédé selon l'une des revendications précédentes, **caractérisé en ce que** l'étape (3) se fait en présence d'un catalyseur de transestérification, avantageusement un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.

11. Procédé selon la revendication précédente, **caractérisé en ce que** le catalyseur est choisi parmi les catalyseurs comprenant au moins un ion de métal alcalin, un composé azoté cyclique ou un ion ammonium quaternaire, de préférence parmi le carbonate de césium, les triazoles, l'hydroxyde de tetraméthylammonium, tout préférentiellement le carbonate de césium

12. Procédé selon la revendication 8 ou 9, **caractérisé en ce que** la quantité molaire du catalyseur va de 10⁻⁷% à 1%, préférentiellement de 10⁻⁴% à 0,5%, par rapport à la quantité de (A) et de (C),.

13. Procédé selon l'une des revendications précédentes, **caractérisé en ce qu'**au moins une partie de l'étape (3) est réalisée à une température allant de 100°C à 250°C, préférentiellement de 150 à 235°C.

14. Procédé selon l'une des revendications précédentes, **caractérisé en ce qu'**au moins une partie de l'étape (3) est réalisée à une pression allant de 30 kPa à 110kPa, avantageusement de 90 à 105 kPa, de préférence à pression atmosphérique.

15. Procédé selon l'une des revendications précédentes, **caractérisé en ce que** le polycarbonate récupéré à l'étape (4) présente une température de transition vitreuse allant de 90 à 180°C, de préférence de 110 à 170°C.

## Patentansprüche

1. Verfahren zur Herstellung eines Polycarbonats, welches eine Glasübergangstemperatur höher oder gleich 50 °C aufweist, **dadurch gekennzeichnet, dass** es umfasst:
- einen Schritt (1) zum Einführen eines Monomers (A) der Formel 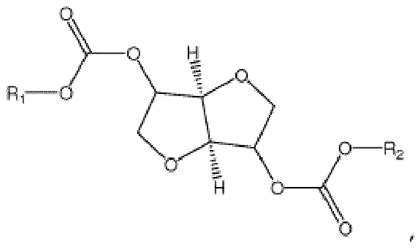 in einen Reaktor,
und wobei R1 und R2 gleiche oder verschiedene Alkylgruppen sind;
- einen Schritt (2) zum Einführen von mindestens einem cyclischen Diol oder einer Mischung von Diolen (B), umfassend mindestens 20 Mol-% von cyclischen Diolen, in den Reaktor;
- einen anschließenden Polykondensationsschritt (3) durch Umesterung der Monomeren-Mischung umfassend die Monomere (A) und (B);
- einen Schritt (4) zum Erhalten des in Schritt (3) gebildeten Polycarbonats.

2. Verfahren nach Anspruch 1, **dadurch gekennzeichnet, dass** die Alkylgruppen R1, und R2 von (A) 1 bis 10 Kohlenstoffatome, vorzugsweise 1 bis 6, beispielsweise 1 bis 4 umfassen, insbesondere sind sie ausgewählt aus den Methyl- und Ethylgruppen.

3. Verfahren nach Anspruch 1, **dadurch gekennzeichnet, dass** (B) eine Mischung von Diolen ist, umfassend, bezogen auf die Gesamtzahl an Diolen, mindestens 50 Mol-% eines cyclischen Diols oder einer Mischung von cyclischen Diolen, vorzugsweise mindestens 80%, am meistens bevorzugt es aus einem cyclischen Diol oder einer Mischung von cyclischen Diolen besteht.

4. Verfahren nach einem der vorhergehenden Ansprüche, **dadurch gekennzeichnet, dass** das cyclische Diol oder die cyclischen Diole ausgewählt sind aus:
• Bisphenolen, wie 2,2-Bis(4-hydroxyphenyl)propan (Bisphenol A), 2,2-Bis(3,5-dimethyl-4-hydroxyphenyl)propan, Bis(4-hydroxyphenyl)methan (Bisphenol F), 1,1-Bis(4-hydroxyphenyl)cyclohexan (Bisphenol C) und 1,1-Bis(4-hydroxyphenyl)ethan (Bisphenol AD);
• Dianhydrohexitolen, wie Isosorbid, Isomannid und Isoidid;
• Cyclohexandimethanolen, wie 1,2-Cyclohexandimethanol, 1,3 Cyclohexandimethanol und 1,4-Cyclohexandimethanol;
• Tricyclodecandimethanolen;
• Pentacyclopentandimethanolen;
• Decalindimethanolen, wie 2,6-Decalindimethanol, 1,5-Decalindimethanol und 2,3-Decalindimethanol;
• Norbornandimethanolen, wie 2,3-Norbornandimethanol und 2,5-Norbornandimethanol,
• Adamantandimethanolen, wie 1,3-Adamantandimethanol;
• Cyclohexandiolen, wie 1,2-Cyclohexandiol, 1,3-Cyclohexandiol und 1,4-Cyclohexandiol;
• Tricyclodecandiolen;
• Pentacyclopentadecandiolen;
• Decalindiolen;
• Norbornandiolen;
• Adamantandiolen.

5. Verfahren nach dem vorhergehenden Anspruch, **dadurch gekennzeichnet, dass** das cyclische Diol ausgewählt ist aus Isosorbid, Isomannid, Isoidid, 1,2-Cyclohexandimethanol, 1,3-Cyclohexandimethanol und 1,4-Cyclohexandimethanol, vorzugsweise Isosorbid.

6. Verfahren nach einem der vorhergehenden Ansprüche, **dadurch gekennzeichnet, dass** es einen Schritt (1') umfasst zum Einführen eines Monomers (C) der Formel: 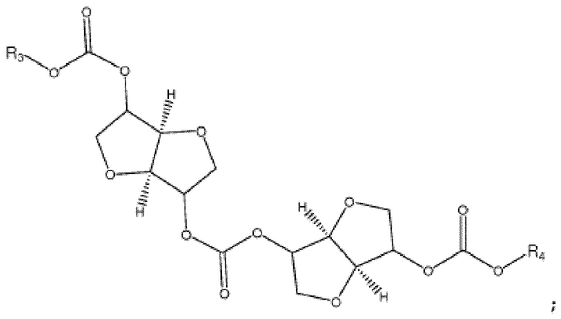 wobei R3 und R4 gleiche oder verschiedene Alkylgruppen sind, umfassend zum Beispiel 1 bis 10 Kohlenstoffatome, vorzugsweise 1 bis 6, vorzugsweise 1 bis 4, insbesondere sind sie ausgewählt aus den Methyl- und/oder Ethylgruppen.

7. Verfahren nach einem der vorhergehenden Ansprüche, **dadurch gekennzeichnet, dass** das Monomer (A) ein Isosorbid-Dialkylcarbonat ist.

8. Verfahren nach einem der vorhergehenden Ansprüche, **dadurch gekennzeichnet, dass** die molaren Mengen von eingeführten Monomeren (A), (B) und (C) sind, bezogen auf deren Gesamtzahl:
• von 1 bis 60% von (A), vorzugsweise von 39% bis 59%;
• von 40 bis 60% von (B);
• und von 0 bis 39% von (C), vorzugsweise von 1 bis 10%;
wobei die Summe von (A), (B) und (C) 100% beträgt.

9. Verfahren nach einem der vorhergehenden Ansprüche, **dadurch gekennzeichnet, dass** die Monomere (A), (B) und (C) mehr als 90 Mol% der gesamten in den Reaktor eingeführten Monomere betragen.

10. Verfahren nach einem der vorhergehenden Ansprüche, **dadurch gekennzeichnet, dass** der Schritt (3) in Gegenwart eines Umesterungskatalysators erfolgt, vorzugsweise eines Katalysators, welcher mindestens ein Alkalimetall- oder ein Erdalkalimetallion, ein quaternäres Ammoniumion, ein quaternäres Phosphoniumion, eine cyclische Stickstoffverbindung, eine basische Verbindung auf Borbasis oder eine basische Verbindung auf Phosphorbasis umfasst.

11. Verfahren nach einem der vorhergehenden Ansprüche, **dadurch gekennzeichnet, dass** der Katalysator ausgewählt ist aus den Katalysatoren, umfassend mindestens ein Alkalimetallion, eine cyclische Stickstoffverbindung, ein quaternäres Ammoniumion, vorzugsweise aus Cäsiumcarbonat, Triazolen, Tetramethylammoniumhydroxid, am meisten bevorzugt Cäsiumcarbonat.

12. Verfahren nach Anspruch 8 oder 9, **dadurch gekennzeichnet, dass** die molare Menge des Katalysators von 10⁻⁷ % bis 1%, vorzugsweise von 10⁻⁴ % bis 0,5 %, bezogen auf die Menge von (A) und (C), beträgt.

13. Verfahren nach einem der vorhergehenden Ansprüche, **dadurch gekennzeichnet, dass** mindestens ein Teil des Schritts (3) bei einer Temperatur im Bereich von 100 °C bis 250 °C, vorzugsweise von 150 bis 235 °C, durchgeführt wird.

14. Verfahren nach einem der vorhergehenden Ansprüche, **dadurch gekennzeichnet, dass** mindestens ein Teil des Schritts (3) bei einem Druck im Bereich von 30 kPa bis 110 kPa, vorzugsweise von 90 bis 105 kPa, vorzugsweise bei atmosphärischem Druck, durchgeführt wird.

15. Verfahren nach einem der vorhergehenden Ansprüche, **dadurch gekennzeichnet, dass** das in Schritt (4) erhaltene Polycarbonat eine Glasübergangstemperatur im Bereich von 90 bis 180 °C, vorzugsweise von 110 bis 170 °C, aufweist.

## Claims

1. A process for manufacturing a polycarbonate with a glass transition temperature of greater than or equal to 50°C, **characterized in that** it comprises:
▪ a step (1) of introducing, into a reactor, a monomer (A) of formula: 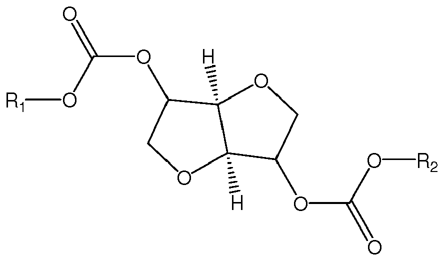 R1 and R2 being identical or different alkyl groups;
▪ a step (2) of introducing, into the reactor, at least one cyclic diol or a mixture of diols (B) comprising at least 20 mol% of cyclic diols;
▪ a subsequent step (3) of polycondensation by transesterification of the monomer mixture comprising monomers (A) and (B);
▪ a step (4) of recovering the polycarbonate formed in step (3).

2. The process as claimed in claim 1, **characterized in that** the alkyl groups R1 and R2 borne by (A) comprise from 1 to 10 carbon atoms, from advantageously 1 to 6, for example from 1 to 4, and are most particularly chosen from methyl and ethyl groups.

3. The process as claimed in claim 1, **characterized in that** (B) is a mixture of diols comprising, relative to the total number of diols, at least 50 mol% of a cyclic diol or of a mixture of cyclic diols, preferentially at least 80%, and most preferentially consists of a cyclic diol or a mixture of cyclic diols.

4. The process as claimed in one of the preceding claims, **characterized in that** the cyclic diol(s) are chosen from:
▪ bisphenols such as 2,2-bis(4-hydroxyphenyl)propane (bisphenol A), 2,2-bis(3,5-dimethyl-4-hydroxyphenyl)propane, bis(4-hydroxyphenyl)methane (bisphenol F), 1,1-bis(4-hydroxyphenyl)cyclohexane (bisphenol C) and 1,1-bis(4-hydroxyphenyl)ethane (bisphenol AD);
▪ dianhydrohexitols such as isosorbide, isomannide and isoidide;
▪ cyclohexanedimethanols such as 1,2-cyclohexanedimethanol, 1,3-cyclohexanedimethanol and 1,4-cyclohexanedimethanol;
▪ tricyclodecanedimethanols;
▪ pentacyclopentanedimethanols;
▪ decalindimethanols such as 2,6-decalindimethanol, 1,5-decalindimethanol and 2,3-decalindimethanol;
▪ norbornanedimethanols such as 2,3-norbornanedimethanol and 2,5-norbornanedimethanol;
▪ adamantanedimethanols such as 1,3-adamantanedimethanol;
▪ cyclohexanediols such as 1,2-cyclohexanediol, 1,3-cyclohexanediol and 1,4-cyclohexanediol;
▪ tricyclodecanediols;
▪ pentacyclopentadecanediols;
▪ decalindiols;
▪ norbornanediols;
▪ and adamantanediols.

5. The process as claimed in the preceding claim, **characterized in that** the cyclic diol is chosen from isosorbide, isomannide and isoidide, 1,2-cyclohexanedimethanol, 1,3-cyclohexanedimethanol and 1,4-cyclohexanedimethanol, preferentially isosorbide.

6. The process as claimed in one of the preceding claims, **characterized in that** it comprises a step (1') of introducing a monomer (C) of formula: 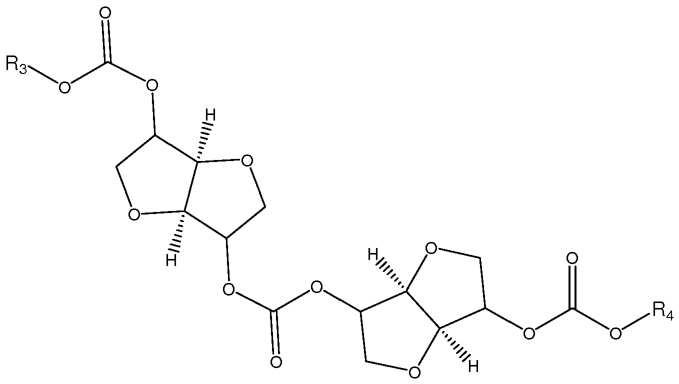 R3 and R4 being identical or different alkyl groups comprising, for example, from 1 to 10 carbon atoms, advantageously from 1 to 6 and preferentially from 1 to 4, and are most particularly chosen from methyl and/or ethyl groups.

7. The process as claimed in one of the preceding claims, **characterized in that** the monomer (A) is an isosorbide dialkyl carbonate.

8. The process as claimed in one of the preceding claims, **characterized in that** the molar amounts of monomers (A), (B) and (C) introduced are, relative to their total number:
▪ from 1% to 60% of (A), advantageously from 39% to 59%;
▪ from 40% to 60% of (B);
▪ and from 0% to 39% of (C), preferentially from 1% to 10%,
the sum of (A), (B) and (C) being 100%.

9. The process as claimed in one of the preceding claims, **characterized in that** the monomers (A), (B) and (C) constitute more than 90 mol% of the total amount of monomers introduced into the reactor.

10. The process as claimed in one of the preceding claims, **characterized in that** step (3) takes place in the presence of a transesterification catalyst, advantageously a catalyst comprising at least one alkali metal or alkaline-earth metal ion, a quaternary ammonium ion, a quaternary phosphonium ion, a cyclic nitrogen compound, a basic boron-based compound or a basic phosphorous-based compound.

11. The process as claimed in the preceding claim, **characterized in that** the catalyst is chosen from catalysts comprising at least one alkali metal ion, a cyclic nitrogen compound or a quaternary ammonium ion, preferably from cesium carbonate, triazoles or tetramethylammonium hydroxide, most preferentially cesium carbonate.

12. The process as claimed in claim 8 or 9, **characterized in that** the molar amount of the catalyst ranges from 10⁻⁷% to 1%, preferentially from 10⁻⁴% to 0.5%, relative to the amount of (A) and (C).

13. The process as claimed in one of the preceding claims, **characterized in that** at least part of step (3) is performed at a temperature ranging from 100°C to 250°C and preferentially from 150 to 235°C.

14. The process as claimed in one of the preceding claims, **characterized in that** at least part of step (3) is performed at a pressure ranging from 30 kPa to 110 kPa, advantageously from 90 to 105 kPa, preferably at atmospheric pressure.

15. The process as claimed in one of the preceding claims, **characterized in that** the polycarbonate recovered in step (4) has a glass transition temperature ranging from 90 to 180°C and preferably from 110 to 170°C.
